# EUROPEAN PATENT APPLICATION

(11) **EP 3 933 618 A1**
(43) Date of publication of application: **05.01.2022**
(21) Application number: 20891997.7
(22) Date of filing: 26.11.2020
(51) Int. Cl.: G06F 16/951

(54) **METHOD FOR AUTOMATICALLY IDENTIFYING VALID DATA ACQUISITION MODULE AND SYSTEM**

(30) Priority: 27.11.2019 CN 201911186729
(71) Applicant: Guangzhou Quick Decision Information Technology Co., Ltd., Guangzhou, Guangdong 510000 (CN)
(72) Inventor: LI, Shaohui, Guangzhou, Guangdong 510000 (CN); JU, Kaibo, Guangzhou, Guangdong 510000 (CN); MA, Bing, Guangzhou, Guangdong 510000 (CN)
(74) Representative: Dr. Gassner & Partner mbB
(86) International application number: PCT/CN2020/131856
(87) International publication number: WO 2021/104387

(57) **Abstract**

The embodiments of the application disclose a method and system for automatically identifying valid data acquisition module. The method for automatically identifying a valid data acquisition module includes that: a data acquisition module is acquired, and the data acquisition module is sent to a data acquisition apparatus, wherein the data acquisition apparatus runs a data acquisition instruction, the data acquisition instruction automatically acquires multiple corresponding datasets, and each dataset in the multiple datasets corresponds to a complete data acquisition instruction; the data acquisition apparatus sends the multiple datasets to a data acquisition module identification apparatus; and the data acquisition module identification apparatus determines whether each dataset in the multiple datasets satisfies a preset condition. According to the application, whether an error occurs to a preset rule in a data acquisition module is automatically identified and judged, so that the error checking efficiency of the preset rule in the data acquisition module is improved. In addition, the accuracy of the preset rule in the data acquisition module is ensured to achieve a purpose of ensuring the quality of an online survey questionnaire.

## Description

### Cross-Reference to Related Applications

The present application claims priority to Chinese Patent Application No. 201911186729.1, filed to the China National Intellectual Property Administration on November 27, 2019 and entitled "Method and System for Automatically Identifying Valid Data Acquisition Module", the disclosure of which is hereby incorporated by reference in its entirety.

### Technical Field

The application relates to the field of questionnaire survey, and particularly to a method and system for automatically identifying a valid data acquisition module.

### Background

In recent years, with the constant change of market demands, questionnaire survey has become a common behavior of many operators for obtaining market demands, thereby making decisions. According to different carriers, questionnaire survey may be divided into paper questionnaire survey and online questionnaire survey. Online questionnaire survey refers to that a user fills in answers to a questionnaire in a client and then a server collects and analyzes the answers.

As online questionnaire gets popular, more and more operators find that it is hard to ensure the answering quality. This is mainly because a questionnaire for comprehensive survey includes too many questions, and as an answering process goes on, a user often fills in answers at random and even directly stops answering. Therefore, present online survey questionnaires increasingly tend to appropriately adjust questions according to answering conditions to improve correlations between the questionnaires and users as well as the answering quality. However, in practice, appropriately adjusting questions and designing an online survey questionnaire according to an answering condition may generate a large number of questionnaire logic rules, and manual error checking may cost plenty of time and omit some errors at a great possibility. Therefore, it is expected that a questionnaire error checking simulation method and system may be provided to automatically implement questionnaire logic rule-based error checking to improve the questionnaire logic rule-based error checking efficiency and ensure the quality of an online survey questionnaire.

### Summary

One of embodiments of the application provides a questionnaire error checking simulation method and system. A method for automatically identifying a valid data acquisition module includes that: a data acquisition module is acquired, and the data acquisition module is sent to a data acquisition apparatus, wherein the data acquisition apparatus runs a data acquisition instruction, the data acquisition instruction automatically acquires multiple corresponding datasets, and each dataset in the multiple datasets corresponds to a complete data acquisition instruction; the data acquisition apparatus sends the multiple datasets to a data acquisition module identification apparatus; and the data acquisition module identification apparatus determines whether each dataset in the multiple datasets satisfies a preset condition, if YES, determines that the data acquisition module is a valid data acquisition module, and if NO, acquires the corresponding dataset for analysis and adjusts the data acquisition module until each dataset in the multiple datasets satisfies the preset condition.

In some embodiments, the data acquisition module at least includes first data, and the dataset at least includes second data.

In some embodiments, that the data acquisition instruction automatically acquires the multiple corresponding datasets includes that: the data acquisition instruction acquires a type of the first data in the data acquisition module; the data acquisition instruction generates a corresponding number of random variables according to the type of the first data; and the data acquisition instruction generates the second data corresponding to the first data based on the random variable, and forms the dataset based on the second data.

In some embodiments, the operation that the data acquisition module identification apparatus determines whether each dataset in the multiple datasets satisfies the preset condition includes that: the data acquisition module identification apparatus determines whether a jump logic of the data acquisition module is consistent with the preset condition according to a first number and second number in the second data in each dataset in the multiple datasets, the jump logic being a logic related to a jump sequence of the first data in the data acquisition module.

In some embodiments, the operation that the data acquisition module identification apparatus determines whether each dataset in the multiple datasets satisfies the preset condition includes that: the data acquisition module identification apparatus determines whether a random logic is consistent with the preset condition according to a first numbering sequence or/and second numbering sequence of the second data in each dataset in the multiple datasets, the random logic being a logic related to a storage sequence of the first data in the data acquisition module.

In some embodiments, the operation that the data acquisition module identification apparatus determines whether each dataset in the multiple datasets satisfies the preset condition includes that: the data acquisition module identification apparatus determines whether an option show/hide logic or option source logic of the data acquisition module is consistent with the preset condition according to the second number of the second data in each dataset in the multiple datasets, the option show/hide logic being a logic related to a data storage manner of the first data, and the option source logic being a logic related to a source of the first data in the data acquisition module.

In some embodiments, the data acquisition instruction includes select, fill in, forward, back, jump to a specified question, turn the page, and/or complete.

One of the embodiments of the application provides a system for automatically identifying a valid data acquisition module, which includes: a dataset acquisition module, configured to acquire a data acquisition module, and send the data acquisition module to a data acquisition apparatus, wherein the data acquisition apparatus runs a data acquisition instruction, the data acquisition instruction automatically acquires multiple corresponding datasets, and each dataset in the multiple datasets corresponds to a complete data acquisition instruction; a dataset sending module, configured for the data acquisition apparatus to send the multiple datasets to a data acquisition module identification apparatus; and a data identification and analysis module, configured for the data acquisition module identification apparatus to determine whether each dataset in the multiple datasets satisfies a preset condition, if YES, determine that the data acquisition module is a valid data acquisition module, and if NO, acquire the corresponding dataset for analysis and adjust the data acquisition module until each dataset in the multiple datasets satisfies the preset condition.

One of the embodiments of the application provides a method for automatically identifying a valid data acquisition module. The method is characterized by including that: a data acquisition apparatus receives a data acquisition module, the data acquisition module at least including first data; the data acquisition apparatus runs a data acquisition instruction, wherein the data acquisition instruction acquires a type of the first data, the data acquisition instruction generates a corresponding number of random variables according to the type of the first data, the data acquisition instruction generates second data corresponding to the first data based on the random variable, and forms a dataset based on the second data, the dataset at least including the second data, and the data acquisition instruction automatically acquires multiple corresponding datasets, each dataset in the multiple datasets corresponding to a complete data acquisition instruction; the data acquisition apparatus sends the multiple datasets to a data acquisition module identification apparatus; and the data acquisition module identification apparatus determines whether each dataset in the multiple datasets satisfies a preset condition, if YES, determines that the data acquisition module is a valid data acquisition module, and if NO, acquires the corresponding dataset for analysis and adjusts the data acquisition module until each dataset in the multiple datasets satisfies the preset condition.

In some embodiments, the operation that the data acquisition module identification apparatus determines whether each dataset in the multiple datasets satisfies the preset condition includes that: the data acquisition module identification apparatus determines whether a jump logic of the data acquisition module is consistent with the preset condition according to a first number and second number in the second data in each dataset in the multiple datasets, the jump logic being a logic related to a jump sequence of the first data in the data acquisition module.

In some embodiments, the operation that the data acquisition module identification apparatus determines whether each dataset in the multiple datasets satisfies the preset condition includes that: the data acquisition module identification apparatus determines whether a random logic is consistent with the preset condition according to a first numbering sequence or/and second numbering sequence of the second data in each dataset in the multiple datasets, the random logic being a logic related to a storage sequence of the first data in the data acquisition module.

In some embodiments, the operation that the data acquisition module identification apparatus determines whether each dataset in the multiple datasets satisfies the preset condition includes that: the data acquisition module identification apparatus determines whether an option show/hide logic or option source logic of the data acquisition module is consistent with the preset condition according to the second number of the second data in each dataset in the multiple datasets, the option show/hide logic being a logic related to a data storage manner of the first data, and the option source logic being a logic related to a source of the first data in the data acquisition module.

In some embodiments, the data acquisition instruction includes select, fill in, forward, back, jump to a specified question, turn the page, and/or complete.

One of the embodiments of the application provides a method for automatically identifying a valid data acquisition module, which includes that: a data acquisition module is acquired; the data acquisition module is sent to a data acquisition apparatus for the data acquisition apparatus to receive the data acquisition module, run a data acquisition instruction, and send multiple datasets to a data acquisition module identification apparatus, wherein the data acquisition instruction automatically acquires the multiple corresponding datasets, each dataset in the multiple datasets corresponds to a complete data acquisition instruction, the data acquisition module at least includes first data, and the dataset at least includes second data; and the data acquisition module identification apparatus determines whether each dataset in the multiple datasets satisfies a preset condition, if YES, determines that the data acquisition module is a valid data acquisition module, and if NO, acquires the corresponding dataset for analysis and adjusts the data acquisition module until each dataset in the multiple datasets satisfies the preset condition.

In some embodiments, the operation that the data acquisition module identification apparatus determines whether each dataset in the multiple datasets satisfies the preset condition includes that: the data acquisition module identification apparatus determines whether a jump logic of the data acquisition module is consistent with the preset condition according to a first number and second number in the second data in each dataset in the multiple datasets, the jump logic being a logic related to a jump sequence of the first data in the data acquisition module.

In some embodiments, the operation that the data acquisition module identification apparatus determines whether each dataset in the multiple datasets satisfies the preset condition includes that: the data acquisition module identification apparatus determines whether a random logic is consistent with the preset condition according to a first numbering sequence or/and second numbering sequence of the second data in each dataset in the multiple datasets, the random logic being a logic related to a storage sequence of the first data in the data acquisition module.

In some embodiments, the operation that the data acquisition module identification apparatus determines whether each dataset in the multiple datasets satisfies the preset condition includes that: the data acquisition module identification apparatus determines whether an option show/hide logic or option source logic of the data acquisition module is consistent with the preset condition according to the second number of the second data in each dataset in the multiple datasets, the option show/hide logic being a logic related to a data storage manner of the first data, and the option source logic being a logic related to a source of the first data in the data acquisition module.

One of the embodiments of the application provides an apparatus for automatically identifying a valid data acquisition module, which includes a processor and is characterized in that the processor is configured to execute the method for automatically identifying a valid data acquisition module.

One of the embodiments of the application provides a computer-readable storage medium, which stores a computer instruction, wherein a computer executes the method for automatically identifying a valid data acquisition module after reading the computer instruction in the storage medium.

### Brief Description of the Drawings

The application will further be described with exemplary embodiments. These exemplary embodiments will be described in detail through the drawings. These embodiments are unrestrictive. In these embodiments, the same numbers represent the same structures.
Fig. 1 is an exemplary schematic diagram of a system for automatically identifying a valid data acquisition module according to some embodiments of the application;
Fig. 2 is an exemplary flowchart of a method for automatically identifying a valid data acquisition module according to some embodiments of the application;
Fig. 3 is an exemplary flowchart that a data acquisition instruction automatically acquires multiple corresponding datasets according to some embodiments of the application;
Fig. 4 is an exemplary flowchart of determining whether each dataset in multiple datasets satisfies a preset condition according to some embodiments of the application;
Fig. 5 is another exemplary flowchart of determining whether each dataset in multiple datasets satisfies a preset condition according to some embodiments of the application;
Fig. 6 is another exemplary flowchart of determining whether each dataset in multiple datasets satisfies a preset condition according to some embodiments of the application;
Fig. 7 is a module diagram of a system for automatically identifying a valid data acquisition module according to some embodiments of the application;
Fig. 8 is an exemplary flowchart of a method for automatically identifying a valid data acquisition module according to some embodiments of the application; and
Fig. 9 is an exemplary flowchart of a method for automatically identifying a valid data acquisition module according to some embodiments of the application.

### Detailed Description of the Embodiments

For describing the technical solutions of the embodiments of the application more clearly, the drawings required to be used in the description of the embodiments will be briefly introduced below. It is apparent that the drawings in the following description are only some examples or embodiments of the application. Those of ordinary skill in the art may further apply the application to other similar scenes according to these drawings without creative work. Unless apparent from the language environment or otherwise stated, the same reference signs in the drawings represent the same structures or operations.

It should be understood that "system", "apparatus", "unit", and/or "module" used herein are/is methods/a method used to distinguish different components, elements, parts, portions, or assemblies of different levels. However, if other terms may achieve the same purpose, these terms may be replaced with other expressions.

As shown in the application and the claims, terms such as "a/an", "one", "a kind of", and "the" do not refer in particular to a singular form but may also include a plural form, unless exceptional cases are clearly indicated in the context. In general, terms "include" and "contain" only indicate inclusion of steps and elements that are clearly identified, these steps and elements do not form an exclusive enumeration, and a method or a device may also include other steps or elements.

In the application, the flowcharts are used to describe operations executed by a system according to the embodiments of the application. It should be understood that previous or subsequent operations are not always executed accurately in sequence. Instead, each step may be processed in an inverted sequence or at the same time. In addition, other operations may also be added to these processes, or one or more operations may be removed from these processes.

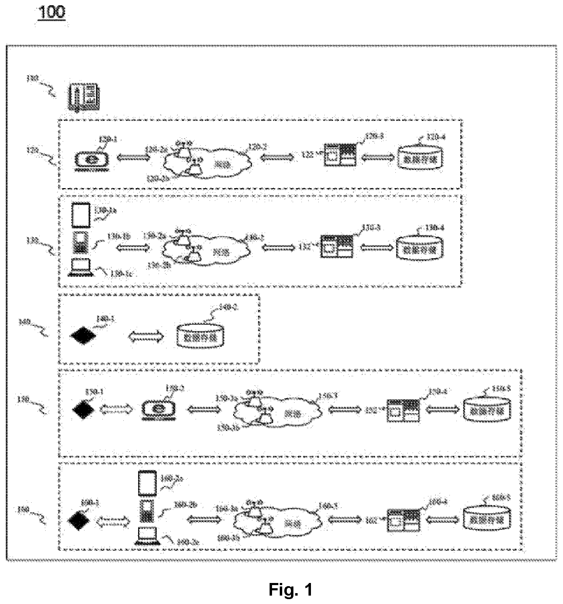

Fig. 1 is an exemplary schematic diagram of a system for automatically identifying a valid data acquisition module according to some embodiments of the application.

A data acquisition manner may include offline data acquisition 110, browser data acquisition 120, and client data acquisition 130.

Offline data acquisition 110 may include paper data acquisition, offline data acquisition of a client (for example, a computer, a tablet, and a mobile phone), etc.

Browser data acquisition 120 includes a browser 120-1, a network 120-2, a server 120-3, and a data storage 120-4. The browser 120-1 sends a signal to the server 120-3 through the network 120-2. The server 120-3 sends first data of the data storage 120-4 to the browser 120-1 through the network, and then receives a dataset of second data from the browser 120-1 through the network 120-2.

Client data acquisition 130 includes a client 130-1, a network 130-2, a server 130-3, and a data storage 130-4. Client data acquisition may refer to browser data acquisition, and will not be elaborated herein.

A data acquisition module-based acquisition manner may include a directly running data acquisition instruction 140, analog browser data acquisition 150, and/or analog client data acquisition 160.

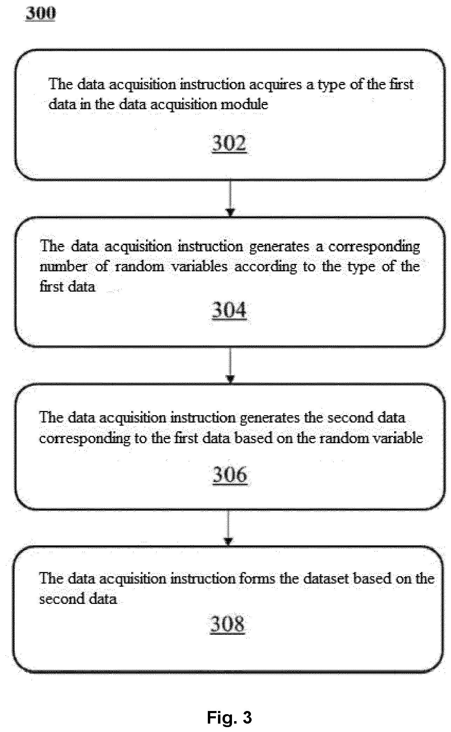

The directly running data acquisition instruction 140 includes a data acquisition instruction program 140-1 and a data storage 140-2. The data acquisition instruction program 140-1 directly acquires first data of a data acquisition module from the data storage 140-2 to acquire a dataset in a manner shown in Fig. 3 of the specification.

Analog browser data acquisition 150 includes a data acquisition instruction 150-1, a browser 150-2, a network 150-3, a data storage 150-5, and a server 150-4. The data acquisition instruction 150-1 sends a signal to the server 150-4 in the browser 150-2 through the network 150-3. The server 150-4 sends a data acquisition module from the data storage 150-5 to the browser 150-2. The data acquisition instruction acquires a dataset in the browser 150-2 in the manner shown in Fig. 3 of the specification.

Analog client data acquisition 160 includes a data acquisition instruction 160-1, a client 160-2, a network 160-3, a data storage 160-5, and a server 160-4. Analog client data acquisition 160 obtains a data acquisition module with reference to analog browser data acquisition, and acquires a dataset with reference to Fig. 3.

The browser 120-1 and the browser 150-2 may acquire information resources between network servers and file systems in the world wide web and a dedicated network. These information resources may be web pages, pictures, audios and videos, or other contents.

The client 130-1 or the client 160-2 may include various types of devices with information receiving and/or sending functions, and for example, may be a computer, a smart phone, and a tablet computer.

The network 120-2, the network 130-2, the network 150-3, and the network 160-3 connect each component of the system such that the components may communicate with one another. The network between each component in the system may be any one or more of a wired network or a wireless network.

The server 120-3, the server 130-3, the server 150-4, and the server 160-4 may process data and/or information from at least one component of the present system or an external data source (for example, a cloud data center).

The data storage 120-4, the data storage 130-4, the data storage 150-5, and the data storage 160-5 may store data and/or instructions. The data storage may include one or more storage components, and each storage component may be an independent device, or may be a part of another device.

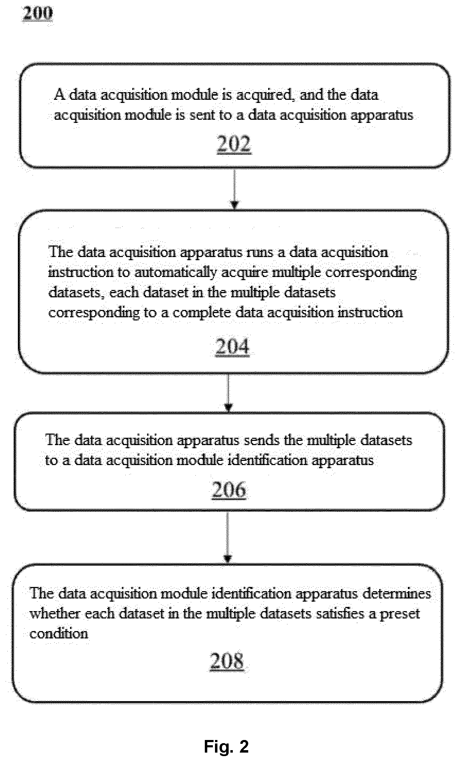

Fig. 2 is an exemplary flowchart of automatically identifying a valid data acquisition module according to some embodiments of the application.

In Step 202, a data acquisition module is acquired, and the data acquisition module is sent to a data acquisition apparatus. Specifically, Step 202 may be executed by a dataset acquisition module 710.

The data acquisition module may be a module configured to bear data. The data born in the data acquisition module is first data. In some embodiments, a content born in the data acquisition module includes, but not limited to, a text, a letter, a numeral, a picture, a voice, a video, a two-dimensional code, and various program codes. In some embodiments, the data acquisition module may bear a survey questionnaire. The data acquisition module may include related information data of the survey questionnaire, for example, a title of the questionnaire, options corresponding to a question, a type label of the question, and numbers of the question and the options, The type label of the question may be a single-choice question, a multiple-choice question, a true-false question, etc.

In some embodiments, data acquisition module-based data acquisition may acquire information through a carrier such as a user terminal operating company, an answering device, an answering client, an answering web page, and an answering applet.

The data acquisition apparatus refers to an apparatus that runs a data acquisition instruction. In some embodiments, the data acquisition apparatus may refer to a data acquisition instruction program 140-1, a browser 150-2, a client 160-1 (for example, a computer, a mobile phone, a pad, and/or a vehicle terminal), etc.

In some embodiments, the data acquisition module may be sent to the data acquisition apparatus through any one or more of a wired network or a wireless network.

In Step 204, the data acquisition apparatus runs a data acquisition instruction to automatically acquire multiple corresponding datasets, each dataset in the multiple datasets corresponding to a complete data acquisition instruction. Specifically, Step 204 may be executed by the dataset acquisition module 710.

In some embodiments, the data acquisition instruction may be a program written with Python and/or Java, and the program may directly acquire the dataset. Data in the dataset is second data. In some embodiments, the data acquisition instruction may be a program written with python, selenium, and/or chrome driver, and the program may generate multiple processes to simultaneously simulate 10 to 500 browsers to acquire datasets, and may simulate browsers to acquire a large number of datasets in short time. In some embodiments, the data acquisition instruction may be a program written with C++, and the program may simulate a client for data acquisition. In addition, the data acquisition instruction may further be written through another common program.

In some embodiments, the data acquisition module may be an automatic answering simulation program. In some embodiments, the data acquisition instruction may perform a jump operation using Activity through Intent and/or Bundle. For example, in the field of online questionnaire survey, after completing an answering operation, the automatic answering simulation program finds a key value of a corresponding interface Activity according to a jump logic, and jumps to the interface Activity through Intent and/or Bundle according to the key value of the interface Activity. The interface Activity may be a specified question interface Activity, a next question interface Activity, and/or a complete interface Activity.

In some embodiments, the data acquisition instruction may perform the jump operation by a window calling method. For example, in the field of online questionnaire survey, after completing the answering operation, the automatic answering simulation program finds a corresponding window address according to the jump logic, and opens a window by the window calling method according to the window address. The window may be a specified question window, a next question window, and/or a complete window.

Each dataset in the multiple datasets may refer to a dataset formed by second data generated based on a type of first data after a complete data acquisition instruction is executed to acquire data. In some embodiments, the dataset may be an answer set of questionnaire questions, for example, an answer set formed by numerals, signs, or other computer codes, such as 1A, 2B, and 3C.

In some embodiments, a manner that the data acquisition apparatus runs the data acquisition instruction to automatically acquire the multiple corresponding datasets may include that: the data acquisition instruction acquires a type of the first data in the data acquisition module; the data acquisition instruction generates a corresponding number of random variables according to the type of the first data; and the data acquisition instruction generates the second data corresponding to the first data based on the random variable, and the data acquisition instruction forms the dataset based on the second data. Detailed steps about the operation that the data acquisition apparatus runs the data acquisition instruction to automatically acquire the multiple corresponding datasets refer to Fig. 3, and will not be elaborated herein.

In some embodiments, the complete acquisition instruction may be from the start of the data acquisition instruction to the end of acquisition. In some embodiments, the data acquisition instruction may judge whether to end acquisition according to the amount of the acquired second data. For example, in the field of questionnaire survey, the automatic simulation program may set that the browser is closed after the number of respondents reaches a set value (for example, 100).

In some embodiments, the data acquisition instruction may judge whether a data acquisition page is an ending page. For example, in the field of questionnaire survey, the automatic simulation program refreshes a questionnaire question if a judgment result is YES, and if the judgment result is NO, answers using a logic corresponding to a question type and clicks to continue answering.

In Step 206, the data acquisition apparatus sends the multiple datasets to a data acquisition module identification apparatus. Specifically, Step 206 may be executed by a dataset sending module 720.

The data acquisition module identification apparatus is an apparatus configured to recognize whether the data in the dataset satisfies a preset condition, and may include a program 140-1, a browser 150-2, and a client 160-2 (for example, a computer, a mobile phone, a pad, and/or a vehicle terminal).

The data acquisition apparatus may send the data acquisition module to the data acquisition module identification apparatus through any one or more of the wired network or the wireless network.

In Step 208, the data acquisition module identification apparatus determines whether each dataset in the multiple datasets satisfies a preset condition. Specifically, Step 208 may be executed by a data identification and analysis module 730.

The preset condition may include associations, set according to a certain rule, between the first data, between the second data, and between the first data and the second corresponding second data. For example, in the field of questionnaire survey, the preset condition may be a questionnaire logic rule, and the logic rule may be associations between a questionnaire question and an option, between questions, and/or between options.

In some embodiments, the preset condition may include a jump logic, a random logic, an option show/hide logic, an option source logic, and/or the like.

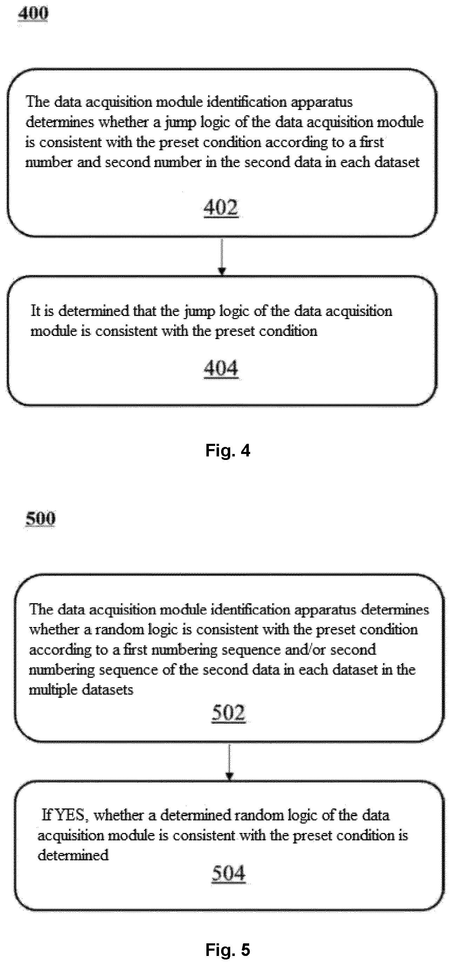

The jump logic is a logic related to a jump sequence of the first data in the data acquisition module. In some embodiments, the jump logic refers to a rule of directly jumping forwards or backwards to a certain piece of first data corresponding to no second data after a certain piece of first data made corresponding to second data by selecting, judging, answering, filling in, or the like. For example, for the field of questionnaire survey, the jump logic specifically refers to a question jump logic, and the question jump logic refers to a rule of directly jumping forwards or backwards to a certain question during answering after a certain question is answered by selecting, judging, answering, or the like. In some embodiments, the jump logic may be a logic of jumping to a question after an option of a certain single-choice question is selected. For example, after option "A" is selected as an answer to a certain question, jumping to a certain question which is a next question required to be answered is directly performed for answering. In some embodiments, the jump logic may be a logic of jumping to a question after multiple options of a certain multiple-choice question are selected. For example, after three options "A", "B", and "C" are selected as an answer to a certain question, jumping to a certain question which is a next question required to be answered is directly performed for answering. In some embodiments, the jump logic may be a logic of jumping to a question after a certain question is judged. For example, after "True" or "√" is selected for a certain question, jumping to a certain question which is a next question required to be answered is directly performed for answering. In some embodiments, the question jump rule may be a logic of jumping to a question after a certain question is answered. For example, when a specified content of a certain question is answered, including "like", and "dislike", or there is no answer content for the specified content, jumping to a certain question which is a next question required to be answered is directly performed for answering. Details about the step of judging whether each dataset is consistent with the jump logic refer to Fig. 4 and the description thereof, and elaborations are omitted herein.

The random logic refers to a logic related to a storage sequence of the first data in the data acquisition module. For example, for the field of questionnaire survey, the random logic specifically refers to an option random logic and a question random logic. The option random logic refers to random sequencing of options in a single question, and question random logic refers to random sequencing of questions of the whole survey questionnaire. For example, in some embodiments, the random logic may be random sequencing of options of a certain single-choice question. For example, option A of a survey questionnaire corresponds to option B of another survey questionnaire. In some embodiments, the random logic may be a random logic relationship of questions of the whole survey questionnaire. A first question of a survey questionnaire corresponds to a last question of another survey questionnaire. Details about the step of judging whether each dataset is consistent with the random logic refer to Fig. 5 and the related description thereof, and elaborations are omitted herein.

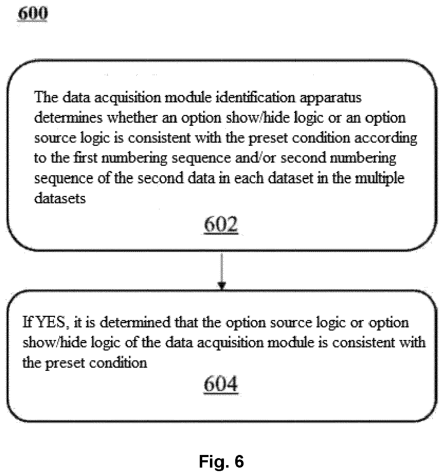

The option show/hide logic is a logic related to a data storage manner of the first data. In some embodiments, the option show/hide logic may refer to a rule of showing or hiding options of a question that is being answered or to be answered according to one or more finished questions after a certain question is answered by selecting, judging, answering, or the like. For example, in some embodiments, the option show/hide logic may be showing option "B" of a next question required to be answered or a question that is being answered after an option of a certain multiple-choice question is selected, for example, after option "A" is selected as an answer to a certain question. For another example, in some embodiments, the option show/hide logic may be showing options "E" and "F" of a last question required to be answered after multiple options of a certain multiple-choice question are selected, for example, after three options "A", "B", and "C" are selected as an answer to a certain question. For another example, in some embodiments, the option show/hide logic may be hiding options "E" and "F" of a last question required to be answered after a certain essay question is answered and option "A" of another choice question is selected. The abovementioned embodiments are only examples of the option show/hide logic and should not be understood as specific limits to the application, and there are also many specific implementation modes for the option show/hide logic. Details about the step of judging whether each dataset is consistent with the random logic refer to Fig. 6 and the description thereof, and elaborations are omitted herein.

The option source logic is a logic related to a source of the first data in the data acquisition module. In some embodiments, the option source logic may refer to that options of other questions will be generated according to one or more answers that have been generated after a certain question is answered by selecting, judging, answering, or the like. In some embodiments, the option source logic may be that, after an option of a certain single-choice question is selected, for example, after option "A" is selected as an answer to a certain question, an option of a next question required to be answered is the same as or associated with option "A". For another example, in some embodiments, the option source logic may be that, after multiple options of a certain multiple-choice question are selected, for example, after three options "A", "B", and "C" are selected as an answer to a certain question, options of a last question required to be answered are the same as or associated with three options "A", "B", and "C" of the question. In some embodiments, the option source logic may be that, after a certain essay question is answered and option "A" of another choice question is selected, an option of a last question required to be answered is generated according to the essay question and option "A" of the choice question. The abovementioned embodiments are only examples of the option source logic and should not be understood as specific limits to the application, and there are also many specific implementation modes for the option source logic. Details about the step of judging whether each dataset is consistent with the option source logic refer to Fig. 6 and the related description thereof, and elaborations are omitted herein.

In some embodiments, the data acquisition module identification apparatus determines that the data acquisition module is a valid data acquisition module when determining that each dataset in the multiple datasets satisfies the preset condition. When determining that at least one dataset in the multiple datasets does not satisfy the preset condition, the data acquisition module identification apparatus acquires the corresponding dataset for correction until each dataset in the multiple datasets satisfies the preset condition. For example, in the field of questionnaire survey, an automatic questionnaire error checking simulation program determines that a questionnaire is valid when determining that all questionnaire answers satisfy the logic rule. For another example, in the field of questionnaire survey, when judging one questionnaire answer does not satisfy the logic rule, the automatic questionnaire error checking simulation program analyzes the questionnaire answer to adjust the questionnaire until all the answers satisfy the logic rule.

Fig. 3 is an exemplary flowchart that a data acquisition instruction automatically acquires multiple corresponding datasets according to some embodiments of the application. As shown in Fig. 3, the operation 300 that the data acquisition instruction automatically acquires the multiple corresponding datasets may include the following steps.

In Step 302, the data acquisition instruction acquires a type of the first data in the data acquisition module. Specifically, Step 302 may be executed by the dataset acquisition module 710.

In some embodiments, the first data may refer to some information in the data acquisition module. For example, for the field of questionnaire survey, the first data may refer to a questionnaire question, and the questionnaire question may specifically include information such as question number information, question content information, question option and/or filling content information, and a question type. For another example, for the field of information survey, the first data may refer to an information filling form, and the information filling form may specifically include form information of the name, the age, the gender, etc.

The type of the first data may be a type configured to represent the first data. In some embodiments, the first data refers to a questionnaire question, and the type of the first data is a question type of the question, such as a single-choice question, a multiple-choice question, a true-false question, and an essay question. In some embodiments, the first data refers to an information filling form, and the type of the first data is a type such as personal information, family information, and job information.

In some embodiments, a manner that the data acquisition instruction acquires the type of the first data in the data acquisition module may be acquiring from a storage device. For example, the data acquisition instruction sends data of acquiring the data acquisition module to the storage device, and then judges and identifies the data in the data acquisition module to further obtain the type of the first data. In some embodiments, the type of the first data may be determined based on a Hyper Text Markup Language (HTML) label, the HTML label being, for example, <container>. For example, it is determined according to label <container>single-choice question<container> that the type of the first data is a single-choice question. For example, it is determined according to label <container>multiple-choice question<container> that the type of the first data is a multiple-choice question.

In Step 304, the data acquisition instruction generates a corresponding number of random variables according to the type of the first data. Specifically, Step 304 may be executed by the dataset acquisition module 710.

The random variable refers to a function or variable capable of generating a random number. For example, in some embodiments, the random variable refers to a random object in the java programming language. For another example, in some embodiments, the random variable refers to random() in the javascript programming language.

In some embodiments, the corresponding number of the random variables generated according to the type of the first data may be one or more. For example, when the type of the first data is a single-choice question, the number of the random variables is one, and the random variable correspondingly generates a random number and determines an option selected for the single-choice question. For another example, when the type of the first data is a multiple-choice question, the number of the random variables is the number of all options of the multiple-choice questions. For example, if there are four options for the multiple-choice question, the number of the random variables is one to four. Then, options selected for the multiple-choice question are determined according to multiple random numbers generated by the one to four random variables.

In Step 306, the data acquisition instruction generates the second data corresponding to the first data based on the random variable. Specifically, Step 306 may be executed by the dataset acquisition module 710.

In some embodiments, the second data may refer to some information in the dataset. For example, for the field of questionnaire survey, the second data may specifically refer to questionnaire answer information, and the questionnaire answer information may specifically include question number information, answer selected option information, and answer filling content information. For another example, for the field of information survey, the second data may refer to a filling content corresponding to an information filling form, and the filling content may specifically include practical information of the name, the age, the gender, the income, etc.

In some embodiments, generating the second data corresponding to the first data based on the random variable may be implemented by recording the random number generated by the random variable through the data acquisition instruction. In some embodiments, generating the second data corresponding to the first data based on the random variable may be implemented by selecting an answer according to the random number generated by the random variable through the data acquisition instruction and then recording the generated second data through the data acquisition instruction.

In Step 308, the data acquisition instruction forms the dataset based on the second data. Specifically, Step 308 may be executed by the dataset acquisition module 710.

In some embodiments, the dataset may be generated after the complete second data is recorded through the data acquisition instruction. In some embodiments, the dataset may be generated by sending the complete second dataset recorded in the data acquisition module to a server through the data acquisition instruction. In some embodiments, the dataset may be a dataset formed by all answer information for a questionnaire.

Fig. 4 is an exemplary flowchart of determining whether each dataset in multiple datasets satisfies a preset condition according to some embodiments of the application. As shown in Fig. 4, the operation 400 that whether each dataset in the multiple datasets satisfies the preset condition is judged may include the following steps.

In Step 402, the data acquisition module identification apparatus determines whether a jump logic of the data acquisition module is consistent with the preset condition according to a first number and second number in the second data in each dataset. Specifically, Step 402 may be executed by the data identification and analysis module 730.

The first number refers to a code of each piece of second data, and the second number refers to an option number in each piece of second data. For example, in some embodiments, when the second data is questionnaire answer information, the first number is a number of an answered question in the answer information, and the second number is an option selected for each answered question in the answer information. For example, data 13A in an answer represents that a question numbered as "13" is answered and option "A" is selected for the question. For another example, in some embodiments, when the second data is survey questionnaire filling information, the first number is a correspondingly filled item number, and the second number is an option selected in a filled item. For example, in 10001-2, "10001" represents filling field "gender", and "2" represents "female".

The jump logic is a logic related to a jump sequence of the first data in the data acquisition module. In some embodiments, the jump logic refers to a rule of directly jumping forwards or backwards to a certain piece of first data corresponding to no second data after a certain piece of first data made corresponding to second data by selecting, judging, answering, filling in, or the like. For example, for the field of questionnaire survey, the jump logic specifically refers to a question jump logic, and the question jump logic refers to a rule of directly jumping forwards or backwards to a certain question during answering after a certain question is answered by selecting, judging, answering, or the like. More details about the jump logic refer to Fig. 2, and elaborations are omitted herein.

In some embodiments, the jump logic may be acquired in a manner that the processing device automatically extracts the jump logic after a questionnaire investigator uploads or designs a survey questionnaire in the server. In some embodiments, the jump logic may be acquired in a manner that the questionnaire investigator directly uploads the jump logic in the server. In some embodiments, a sample of the acquired jump logic may be a certain segment of code or text. For example, jumping to code statement if then or if then else of a certain question is implemented after a certain answer of a certain single single-choice question is selected.

In some embodiments, determining whether the jump logic of the data acquisition module is consistent with the preset condition may be implemented by the server processing device. For example, the processing device automatically determines by comparison whether information in an answer of the second data is consistent with a preset jump logic. For example, when the preset jump logic is that jumping to question 3 should be implemented to continue answering after option A of single-choice question 1 is selected, whether an option selected for question 1 in the answer is A is determined by comparison. If the option selected for question 1 is option A, question 3 is answered, and question 2 is not answered, it is determined that the jump logic is consistent with the preset condition. Otherwise, it is determined that the jump logic is inconsistent with the preset condition. For another example, when the preset jump logic is that jumping to question 4 should be implemented to continue answering if it is determined that question 1 is true, whether a choice in question 1 in the answer is "true" is determined by comparison. If the choice in question 1 is "true", question 4 is answered, and questions 2 and 3 are not answered, it is determined that the jump logic is consistent with the preset condition. Otherwise, it is determined that the jump logic is inconsistent with the preset condition. For another example, when the preset jump logic is that jumping to question 5 should be implemented to continue answering after options A, B, and C are selected for multiple-choice question 1, whether an answer in question 1 is "ABC" is determined by comparison. If the answer in question 1 is "ABC", question 5 is answered, and questions 2, 3, and 4 are not answered, it is determined that the jump logic is consistent with the preset condition. Otherwise, it is determined that the jump logic is inconsistent with the preset condition.

In Step 404, if YES, it is determined that the jump logic of the data acquisition module is consistent with the preset condition. Specifically, Step 404 may be executed by the data identification and analysis module 730.

In some embodiments, when it is determined that the jump logic is consistent with the preset condition, the data acquisition module is determined as a valid data acquisition module, and is used for subsequent survey analysis.

In some embodiments, after it is determined that the jump logic is inconsistent with the preset condition, the processing device transmits and stores an error result to the storage device through the network. In some embodiments, the error result may also be sent to a terminal of the questionnaire investigator for display to timely notify a user to receive the jump logic error checking result.

Fig. 5 is another exemplary flowchart of determining whether each dataset in multiple datasets satisfies a preset condition according to some embodiments of the application. As shown in Fig. 5, the operation 400 that whether each dataset in the multiple datasets satisfies the preset condition is judged may include the following steps.

In Step 502, the data acquisition module identification apparatus determines whether a random logic is consistent with the preset condition according to a first numbering sequence and/or second numbering sequence of the second data in each dataset in the multiple datasets. Specifically, Step 502 may be executed by the data identification and analysis module 730.

The first numbering sequence refers to a coding sequence rule of each piece of second data, and the second numbering sequence refers to a numbering sequence rule of the option in each piece of second data. For example, in some embodiments, when the second data is questionnaire answer information, the first number is a question number corresponding to the answer information, such as 1, 2, 3 ..., and the second number is a selected option number corresponding to the answer information, such as a sequence rule like A, B, C ... or 1, 2, 3 ... The random logic refers to a logic related to a storage sequence of the first data in the data acquisition module. For example, for the field of questionnaire survey, the random logic specifically refers to an option random logic and a question random logic. The option random logic refers to random sequencing of options in a single question, and question random logic refers to random sequencing of questions of the whole survey questionnaire. More details about the random logic refer to Step 204 in Fig. 2 and the related description thereof, and elaborations are omitted herein.

In some embodiments, the random logic may be acquired in a manner that the processing device automatically extracts the random logic after the questionnaire investigator uploads or designs a survey questionnaire in the server. In some embodiments, the random logic may be acquired in a manner that the questionnaire investigator directly uploads the jump logic in the server. In some embodiments, a sample of the acquired random logic may be a certain segment of code or text, for example, a code including random object in the java programming language, and for another example, a code including random() in the javascript programming language.

In some embodiments, determining whether the random logic of the data acquisition module is consistent with the preset condition may be implemented by the server processing device. For example, the processing device automatically determines by comparison whether option and question sequences of multiple questionnaire answers are consistent. For example, if all options of a first question in all questionnaire answers are consistent in sequence, it is determined that the random logic of the data acquisition module is inconsistent with the preset condition. For another example, if questions corresponding to all questionnaire answers are consistent in sequence, it is determined that the random logic of the data acquisition module is inconsistent with the preset condition.

In Step 504, if YES, whether a determined random logic of the data acquisition module is consistent with the preset condition is determined. Specifically, Step 504 may be executed by the data identification and analysis module 730.

In some embodiments, when it is determined that the random logic is consistent with the preset condition, the data acquisition module is determined as a valid data acquisition module, and is used for subsequent survey analysis.

In some embodiments, after it is determined that the random logic is inconsistent with the preset condition, the processing device transmits and stores an error result to the storage device through the network. In some embodiments, the error result may also be sent to the terminal of the questionnaire investigator for display to timely notify the user to receive the random logic error checking result.

Fig. 6 is another exemplary flowchart of determining whether each dataset in multiple datasets satisfies a preset condition according to some embodiments of the application. As shown in Fig. 6, the operation that whether each dataset in the multiple datasets satisfies the preset condition is judged may include the following steps.

In Step 602, the data acquisition module identification apparatus determines whether an option show/hide logic or an option source logic is consistent with the preset condition according to the first numbering sequence and/or second numbering sequence of the second data in each dataset in the multiple datasets. Specifically, Step 602 may be executed by the data identification and analysis module 730.

The option source logic is a logic related to the source of the first data in the data acquisition module. In some embodiments, the option source logic may refer to that options of other questions will be generated according to one or more answers that have been generated after a certain question is answered by selecting, judging, answering, or the like. More details about the option source logic refer to Step 204 in Fig. 2 and the related description thereof, and elaborations are omitted herein.

In some embodiments, the option source logic may be acquired in a manner that the processing device automatically extracts the option source logic after the questionnaire investigator uploads or designs a survey questionnaire in the server. In some embodiments, the option source logic may be acquired in a manner that the questionnaire investigator directly uploads the option source logic in the server. In some embodiments, a sample of the acquired option source logic may be a certain segment of code. For example, code statement if then or if then else of an option of a certain question is directly filled after a certain answer to a certain single-choice question is selected.

In some embodiments, comparing an answer and the option source logic is implemented manually. For example, whether an option of the answer is consistent with the option source logic is manually determined by comparison. In some embodiments, comparing an answer and the option source logic is implemented by the server processing device. For example, the processing device automatically determines by comparison whether an option of the answer is consistent with the option source logic. In some embodiments, the option source logic is that, when answer A is selected for single-choice question 1, option B in question 3 should be associated with option A of question 1, but the answer includes no question 3, there is no option B for question 3, or option B is not associated with answer A to question 1, so it is determined that the option source logic of the data acquisition module is inconsistent with the preset condition. For another example, the option source logic is that, when essay question 1 is answered, option A of question 2 is generated according to the answer to question 1, but the answer includes no question 2, there is no option A for question 2, or option A is not associated with the answer to question 1, so it is determined that the option source logic of the data acquisition module is inconsistent with the preset condition.

The option show/hide logic is a logic related to the data storage manner of the first data. In some embodiments, the option show/hide logic may refer to a rule of showing or hiding options of a question that is being answered or to be answered according to one or more finished questions after a certain question is answered by selecting, judging, answering, or the like. More details about the option show/hide logic refer to Step 204 in Fig. 2 and the related description thereof, and elaborations are omitted herein.

In some embodiments, the option show/hide logic may be acquired in a manner that the processing device automatically extracts the option show/hide logic after the questionnaire investigator uploads or designs a survey questionnaire in the server. In some embodiments, the option show/hide logic may be acquired in a manner that the questionnaire investigator directly uploads the option show/hide logic in the server. In some embodiments, a sample of the acquired option show/hide logic may be a certain segment of code. For example, code statement if then or if then else of an option of a certain question is directly hidden after a certain answer to a certain single-choice question is selected.

In some embodiments, comparing an answer and the option show/hide logic is implemented manually. For example, whether an option of the answer is consistent with the option show/hide logic is manually determined by comparison. In some embodiments, comparing an answer and the option show/hide logic is implemented by the server processing device. For example, the processing device automatically determines by comparison whether an option of the answer is consistent with the option show/hide logic. In some embodiments, the option show/hide logic is that, when answer C to single-choice question 4 is selected, option D in question 4 should be hidden, but option D in question 4 exists or is selected, so it is determined that the option show/hide logic of the data acquisition module is inconsistent with the preset condition. For another example, the option show/hide logic is that, when it is determined that question 5 is "false", option E and option F of question 6 and question 7 should be shown, but one of option E and option F of question 6 and question 7 does not exist, so it is determined that the option show/hide logic of the data acquisition module is inconsistent with the preset condition.

In some embodiments, determining whether the option show/hide logic or option source logic of the data acquisition module is consistent with the preset condition may be implemented manually. For example, an answer number inconsistent with the option source logic is manually screened, and then the option source logic that has an error is acquired. In some embodiments, determining whether the option show/hide logic or option source logic of the data acquisition module is consistent with the preset condition may be implemented by the server processing device. For example, the processing device automatically screens an answer number inconsistent with the option source logic and then acquires the option source logic that has an error.

In Step 604, if YES, it is determined that the option source logic or option show/hide logic of the data acquisition module is consistent with the preset condition. Step 604 may be executed by the data identification and analysis module 730.

In some embodiments, when it is determined that the option source logic or the option show/hide logic is consistent with the preset condition, the data acquisition module is determined as a valid data acquisition module, and is used for subsequent survey analysis.

In some embodiments, when it is determined that the answer has an option source error or an option show/hide logic error, the processing device transmits and stores the error result to the database through the network. In some embodiments, the error result may also be sent to the terminal of the questionnaire investigator for display to timely notify the user to receive the option source logic error checking result or the option show/hide logic error.

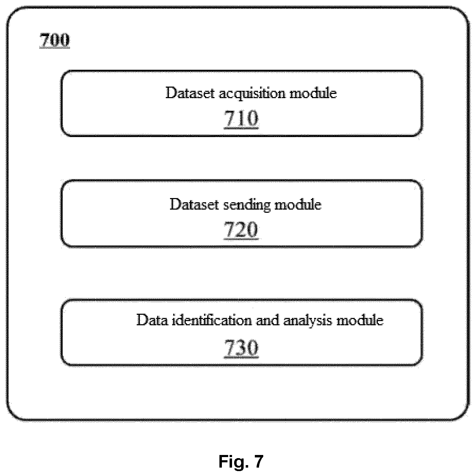

Fig. 7 is a module diagram of a system for automatically identifying a valid data acquisition module according to some embodiments of the application. As shown in Fig. 7, the system for automatically identifying a valid data acquisition module may include a dataset acquisition module 710, a dataset sending module 720, and a data identification and analysis module 730.

The dataset acquisition module 710 may be configured to acquire a data acquisition module, and send the data acquisition module to a data acquisition apparatus, wherein the data acquisition apparatus runs a data acquisition instruction, the data acquisition instruction automatically acquires multiple corresponding datasets, and each dataset in the multiple datasets corresponds to a complete data acquisition instruction. In some embodiments, data in the data acquisition module is first data, and data in the dataset is second data. For example, the data acquisition module may include a survey questionnaire. In some embodiments, the dataset acquisition module 710 may send the data acquisition module to the data acquisition apparatus through wireless and wired networks or Bluetooth. The data acquisition instruction may be a program written with python, selenium, and/or chrome driver. In some embodiments, the data acquisition module may be an automatic answering simulation program. In some embodiments, the data acquisition instruction also includes operations such as select, fill in, forward, back, jump to a specified question, turn the page, and/or complete over the survey questionnaire. In some embodiments, the dataset acquisition module 710 may automatically answer a question in the survey questionnaire through a random variable.

The dataset sending module 720 may be configured for the data acquisition apparatus to send the multiple datasets to a data acquisition module identification apparatus. A sending manner may be sending the data acquisition module to the data acquisition module identification apparatus through any one or more of the wired network or the wireless network.

The data identification and analysis module 730 may be configured for the data acquisition module identification apparatus to determine whether each dataset in the multiple datasets satisfies a preset condition, if YES, determine that the data acquisition module is a valid data acquisition module, and if NO, acquire the corresponding dataset for analysis and adjust the data acquisition module until each dataset in the multiple datasets satisfies the preset condition. In some embodiments, the data identification and analysis module 730 may determine whether the dataset satisfies the preset condition according to a first code and second code in the second data. For example, whether a jump logic, random logic, option source logic, or option show/hide logic of the survey questionnaire is consistent with the preset condition is determined according to an answered question number (i.e., the first code) and a number (i.e., the second code) of an option in the answered question in answer information of the survey questionnaire.

It should be understood that the system and modules thereof shown in Fig. 7 may be implemented in various manners. For example, in some embodiments, the system and the modules thereof may be implemented by hardware, software, or a combination of software and hardware. The hardware part may be implemented by a special logic. The software part may be stored in a memory and executed by a proper instruction execution system such as a microprocessor or dedicated design hardware. Those skilled in the art can understand that the abovementioned method and system may be implemented by using a computer-executable instruction and/or including in a processor control code. Such a code is provided in, for example, a carrier medium like a magnetic disk, a Compact Disc (CD), or a Digital Video Disk-Read Only Memory (DVD-ROM), a programmable memory like a read-only memory (firmware), or a data carrier like an optical or electronic signal carrier. The system and modules thereof in the application may be implemented by a hardware circuit, for example, a very-large-scale integrated circuit or gate array, a semiconductor like a logic chip, a transistor, etc., or a programmable hardware device like a fieldprogrammable gate array, a programmable logic device, etc., or may be implemented by, for example, various types of software executed by a processor, or may be implemented by a combination (for example, firmware) of the hardware circuit and the software.

It is to be noted that the above description about a candidate option display and determination system and modules thereof is only for ease of description and may not limit the application to the scope of the listed embodiments. It can be understood that those skilled in the art, after understanding the principle of the system, may freely combine each module or form subsystems for connection with the other modules without departing from the principle. For example, in some embodiments, the dataset acquisition module 710, dataset sending module 720, and data identification and analysis module 730 disclosed in Fig. 7 may be different modules in the same system, or one module may realize functions of two or more than two of the abovementioned modules. For example, the dataset acquisition module 710 and the dataset sending module 720 may be two modules, or one module may have both acquisition and sending functions. For example, each module may share a storage module, or each module may have its own storage module. Such transformations all fall within the scope of protection of the application.

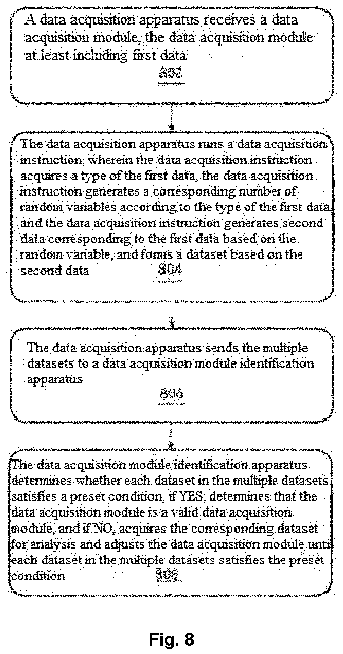

Fig. 8 shows a method for automatically identifying a valid data acquisition module according to an embodiment of the application. The method is applied to a browser 150-2 and a client 160-2. The method includes the following steps.

In Step 802, a data acquisition apparatus receives a data acquisition module, the data acquisition module at least including first data.

In Step 804, the data acquisition apparatus runs a data acquisition instruction, wherein the data acquisition instruction acquires a type of the first data, the data acquisition instruction generates a corresponding number of random variables according to the type of the first data, and the data acquisition instruction generates second data corresponding to the first data based on the random variable, and forms a dataset based on the second data.

The dataset at least includes the second data. The data acquisition instruction automatically acquires multiple corresponding datasets, each dataset in the multiple datasets corresponding to a complete data acquisition instruction.

In Step 806, the data acquisition apparatus sends the multiple datasets to a data acquisition module identification apparatus.

In Step 808, the data acquisition module identification apparatus determines whether each dataset in the multiple datasets satisfies a preset condition, if YES, determines that the data acquisition module is a valid data acquisition module, and if NO, acquires the corresponding dataset for analysis and adjusts the data acquisition module until each dataset in the multiple datasets satisfies the preset condition.

11. The method as claimed in claim 10, wherein the operation that the data acquisition module identification apparatus determines whether each dataset in the multiple datasets satisfies the preset condition includes that:
the data acquisition module identification apparatus determines whether a jump logic of the data acquisition module is consistent with the preset condition according to a first number and second number in the second data in each dataset in the multiple datasets, the jump logic being a logic related to a jump sequence of the first data in the data acquisition module.

Specific implementation and description of each step in the embodiment may refer to the descriptions in the embodiments in Fig. 1 to Fig. 6, and elaborations are omitted herein.

In some embodiments, the operation that the data acquisition module identification apparatus determines whether each dataset in the multiple datasets satisfies the preset condition includes that: the data acquisition module identification apparatus determines whether a random logic is consistent with the preset condition according to a first numbering sequence or/and second numbering sequence of the second data in each dataset in the multiple datasets, the random logic being a logic related to a storage sequence of the first data in the data acquisition module.

In some embodiments, the operation that the data acquisition module identification apparatus determines whether each dataset in the multiple datasets satisfies the preset condition includes that: the data acquisition module identification apparatus determines whether an option show/hide logic or option source logic of the data acquisition module is consistent with the preset condition according to the second number of the second data in each dataset in the multiple datasets, the option show/hide logic being a logic related to a data storage manner of the first data, and the option source logic being a logic related to a source of the first data in the data acquisition module.

In some embodiments, the data acquisition instruction includes select, fill in, forward, back, jump to a specified question, turn the page, and/or complete.

Descriptions about all the steps in Fig. 8 and each step in some subsequent embodiments may refer to the related descriptions in embodiments in Fig. 1 to Fig. 6, and elaborations are omitted herein.

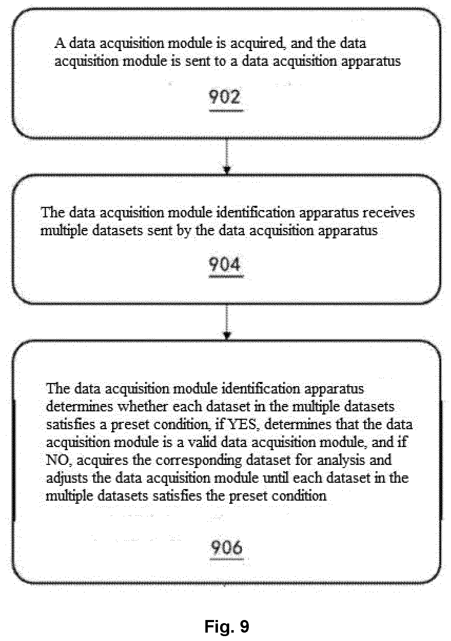

Fig. 9 shows a method for automatically identifying a valid data acquisition module according to an embodiment of the application. The method is applied to a server. The server includes a server processing device. The method includes the following steps.

In Step 902, a data acquisition module is acquired, and the data acquisition module is sent to a data acquisition apparatus.

The data acquisition module is sent to the data acquisition apparatus for a purpose of enabling the data acquisition apparatus to receive the data acquisition module, run a data acquisition instruction, and send multiple datasets to a data acquisition module identification apparatus. The data acquisition instruction automatically acquires the multiple corresponding datasets, each dataset in the multiple datasets corresponds to a complete data acquisition instruction, the data acquisition module at least includes first data, and the dataset at least includes second data.

In Step 904, the data acquisition module identification apparatus receives multiple datasets sent by the data acquisition apparatus.

In Step 906, the data acquisition module identification apparatus determines whether each dataset in the multiple datasets satisfies a preset condition, if YES, determines that the data acquisition module is a valid data acquisition module, and if NO, acquires the corresponding dataset for analysis and adjusts the data acquisition module until each dataset in the multiple datasets satisfies the preset condition.

In some embodiments, the operation that the data acquisition module identification apparatus determines whether each dataset in the multiple datasets satisfies the preset condition includes that: the data acquisition module identification apparatus determines whether a jump logic of the data acquisition module is consistent with the preset condition according to a first number and second number in the second data in each dataset in the multiple datasets, the jump logic being a logic related to a jump sequence of the first data in the data acquisition module.

In some embodiments, the operation that the data acquisition module identification apparatus determines whether each dataset in the multiple datasets satisfies the preset condition includes that: the data acquisition module identification apparatus determines whether a random logic is consistent with the preset condition according to a first numbering sequence or/and second numbering sequence of the second data in each dataset in the multiple datasets, the random logic being a logic related to a storage sequence of the first data in the data acquisition module.

In some embodiments, the operation that the data acquisition module identification apparatus determines whether each dataset in the multiple datasets satisfies the preset condition includes that: the data acquisition module identification apparatus determines whether an option show/hide logic or option source logic of the data acquisition module is consistent with the preset condition according to the second number of the second data in each dataset in the multiple datasets, the option show/hide logic being a logic related to a data storage manner of the first data, and the option source logic being a logic related to a source of the first data in the data acquisition module.

Descriptions about each step in the embodiment of Fig. 9 and each step in some subsequent embodiments may refer to the related descriptions in the method embodiments in Fig. 1 to Fig. 6, and elaborations are omitted herein.

It is to be noted that the contents described in all the embodiments of the application may refer to one another, and no limits are made in the application.

One of the embodiments of the application provides an apparatus for automatically identifying a valid data acquisition module, which includes a processor. The processor is configured to execute the method for automatically identifying a valid data acquisition module.

An embodiment of the application provides a computer-readable storage medium, which stores a computer instruction, wherein a computer executes the method for automatically identifying a valid data acquisition module after reading the computer instruction in the storage medium.

The embodiments of the application may have, but not limited to, the following beneficial effects. (1) Whether an error occurs to a preset rule in a data acquisition module is automatically identified and judged, so that the error checking efficiency of the preset rule in the data acquisition module is improved. (2) The accuracy of the preset rule in the data acquisition module is ensured to achieve a purpose of ensuring the quality of an online survey questionnaire. It is to be noted that different beneficial effects may be achieved in different embodiments. The beneficial effects achievable in different embodiments may be any one or combination of the above, or may be any other achievable beneficial effects.

The basic concepts have been described above. It is apparent to those skilled in the art that the above detailed disclosures are merely examples and not intended to limit the application. Those skilled in the art may make various modifications, improvements, and corrections to the application, even though not specified herein. Such modifications, improvements, and corrections are suggested in the application, and thus still fall within the spirit and scope of the exemplary embodiments of the application.

In addition, specific terms are used in the application to describe the embodiments of the application. For example, "an embodiment", "one embodiment", and/or "some embodiments" mean/means a certain feature, structure, or characteristic related to at least one embodiment of the application. Therefore, it is to be emphasized and noted that "one embodiment", or "an embodiment", or "an alternative embodiment" mentioned twice or for many times at different positions in the specification does not always refer to the same embodiment. In addition, some features, structures, or characteristics in one or more embodiments of the application may be combined as appropriate.

In addition, those skilled in the art can understand that each aspect of the application may be explained and described with a plurality of patentable sorts or conditions, including combinations of any new or useful procedures, machines, products, or substance, or any new and useful improvements thereof. Correspondingly, each aspect of the application may be executed completely by hardware, executed completely by software (including firmware, resident software, microcodes, etc.), or executed by a combination of the hardware and the software. The hardware or software may be called a "data block", "module", "engine", "unit", "component", or "system". In addition, each aspect of the application may be represented as a computer product in one or more computer-readable media, and the product includes a computer-readable program code.

The computer storage medium may include a propagated data signal with a computer program code therein, for example, on a baseband or as a part of a carrier. The propagated signal may be represented in many forms, including an electromagnetic form, an optical form, the like, or a proper combination form. The computer storage medium may be any computer-readable medium except a computer-readable storage medium, and the medium is connected to at least one instruction execution system, apparatus, or device to implement a program for communication, propagation, or transmission. The program code in the computer storage medium may be propagated through any suitable medium, including radio, a cable, an optical fiber, a Radio Frequency (RF), a similar medium, or any combination of the media.

The computer program code required by the operation of each part of the application may be written by any one or more programming languages, including an object-oriented programming language such as Java, Scala, Smalltalk, Eiffel, JADE, Emerald, C++, C#, VB.NET, and Python, a conventional procedural programming language such as C language, Visual Basic, Fortran2003, Perl, COBOL2002, PHP, and ABAP, a dynamic programming language such as Python, Ruby, and Groovy, another programming language, etc. The program code may run completely in a user computer, or run in the user computer as an independent software package, or partially run in the user computer and partially run in a remote computer, or run completely in the remote computer or a server. Under the latter condition, the remote computer may be connected with the user computer through any network form such as a Local Area Network (LAN) or a Wide Area Network (WAN), or connected to an external computer (for example, through the Internet), or in a cloud computing environment, or used as service such as Software as a Service (SaaS).

In addition, unless specified in the claims, the order of the processing elements and sequence, use of numerals and letters, or use of other names in the application is not intended to limit the orders of the flows and methods of the application. Although some invention embodiments that seem useful at present are discussed through various examples in the above disclosure, it should be understood that such details only achieve a purpose of description, and the appended claims are not limited to the disclosed embodiments and intended to cover all corrections and equivalent combinations consistent with the essence and scope of the embodiments of the application instead. For example, the system component described above may be implemented through a hardware device, but may also be implemented only through a software solution. For example, the described system is installed in an existing server or mobile device.

Similarly, it should be noted that, for simplifying the expressions disclosed in the application to help to understand one or more invention embodiments, multiple features may sometimes be incorporated into one embodiment, drawing, or the description thereof in the above description about the embodiments of the application. However, such a disclosure method does not mean that an object of the application needs more features than those mentioned in the claims. In practice, the features of the embodiment are fewer than all features of a single embodiment disclosed above.

Numerals describing the numbers of components and attributes are used in some embodiments. It should be understood that such numerals for describing the embodiments are modified with modifiers "about", "approximately", or "substantially" in some examples. Unless otherwise specified, "about", "approximately", or "substantially" represents that the numeral allows a change of ±20%. Correspondingly, in some embodiments, numerical parameters used in the specification and the claims are all approximate values, and the approximate values may change according to characteristics required by individual embodiments. In some embodiments, the numerical parameter should consider specified valid digits and adopt a general digit retention method. Although numerical ranges and parameters, in some embodiments of the application, used to confirm the breadths of scopes thereof are approximate values, such numerical values are set as accurately as possible in a possible scope in specific embodiments.

The entire contents of each patent, patent application, patent application disclosure, and other materials such as articles, books, specifications, publications, and documents, cited in the application are incorporated in the application by reference, except historical application files inconsistent or conflicting with the contents of the application as well as files (appended to the application at present or latter) limiting the broadest scope of the claims of the application. It is to be noted that the description, definition, and/or use of terms in the application are/is taken as final if the description, definition, and/or use of terms in the materials appended to the application are/is inconsistent or conflict/conflicts with the contents as described in the application.

It should finally be understood that the embodiment in the application is only used to explain the principle of the embodiment of the application, and other transformations may also fall within the scope of the application. Therefore, as an example rather than restriction, alternative configuration of the embodiment of the application may be considered consistent with the teaching of the application. Correspondingly, the embodiment of the application is not limited to the embodiment clearly introduced and described in the application.

## Claims

1. A method for automatically identifying a valid data acquisition module, comprising:
acquiring a data acquisition module, and sending the data acquisition module to a data acquisition apparatus, wherein the data acquisition apparatus runs a data acquisition instruction, the data acquisition instruction automatically acquires multiple corresponding datasets, and each dataset in the multiple datasets corresponds to a complete data acquisition instruction;
sending, by the data acquisition apparatus, the multiple datasets to a data acquisition module identification apparatus; and
by, the data acquisition module identification apparatus, determining whether each dataset in the multiple datasets satisfies a preset condition, if YES, determining that the data acquisition module is a valid data acquisition module, and if NO, acquiring the corresponding dataset for analysis and adjusting the data acquisition module until each dataset in the multiple datasets satisfies the preset condition.

2. The method as claimed in claim 1, wherein the data acquisition module at least comprises first data, and the dataset at least comprises second data.

3. The method as claimed in claim 2, wherein that the data acquisition instruction automatically acquires the multiple corresponding datasets comprises that:
the data acquisition instruction acquires a type of the first data in the data acquisition module;
the data acquisition instruction generates a corresponding number of random variables according to the type of the first data; and
the data acquisition instruction generates the second data corresponding to the first data based on the random variable, and forms the dataset based on the second data.

4. The method as claimed in claim 2, wherein determining, by the data acquisition module identification apparatus, whether each dataset in the multiple datasets satisfies the preset condition comprises:
determining, by the data acquisition module identification apparatus, whether a jump logic of the data acquisition module is consistent with the preset condition according to a first number and second number in the second data in each dataset in the multiple datasets, the jump logic being a logic related to a jump sequence of the first data in the data acquisition module.

5. The method as claimed in claim 2, wherein determining, by the data acquisition module identification apparatus, whether each dataset in the multiple datasets satisfies the preset condition comprises:
determining, by the data acquisition module identification apparatus, whether a random logic is consistent with the preset condition according to a first numbering sequence or/and second numbering sequence of the second data in each dataset in the multiple datasets, the random logic being a logic related to a storage sequence of the first data in the data acquisition module.

6. The method as claimed in claim 2, wherein determining, by the data acquisition module identification apparatus, whether each dataset in the multiple datasets satisfies the preset condition comprises:
determining, by the data acquisition module identification apparatus, whether an option show/hide logic or option source logic of the data acquisition module is consistent with the preset condition according to the second number of the second data in each dataset in the multiple datasets, the option show/hide logic being a logic related to a data storage manner of the first data, and the option source logic being a logic related to a source of the first data in the data acquisition module.

7. The method as claimed in any one of claims 1-6, wherein the data acquisition instruction comprises select, fill in, forward, back, jump to a specified question, turn the page, and/or complete.

8. A system for automatically identifying a valid data acquisition module, comprising:
a dataset acquisition module, configured to acquire a data acquisition module, and send the data acquisition module to a data acquisition apparatus, wherein the data acquisition apparatus runs a data acquisition instruction, the data acquisition instruction automatically acquires multiple corresponding datasets, and each dataset in the multiple datasets corresponds to a complete data acquisition instruction;
a dataset sending module, configured for the data acquisition apparatus to send the multiple datasets to a data acquisition module identification apparatus; and
a data identification and analysis module, configured for the data acquisition module identification apparatus to determine whether each dataset in the multiple datasets satisfies a preset condition, if YES, determine that the data acquisition module is a valid data acquisition module, and if NO, acquire the corresponding dataset for analysis and adjust the data acquisition module until each dataset in the multiple datasets satisfies the preset condition.

9. The system as claimed in claim 8, further comprising that:
the data acquisition module at least comprises first data;
the data acquisition instruction acquires a type of the first data in the data acquisition module; the data acquisition instruction generates a corresponding number of random variables according to the type of the first data; and the data acquisition instruction generates second data corresponding to the first data based on the random variable, and forms the dataset based on the second data, the dataset at least including the second data.

10. A method for automatically identifying a valid data acquisition module, comprising:
receiving, by a data acquisition apparatus, a data acquisition module, the data acquisition module at least comprising first data;
running, by the data acquisition apparatus, a data acquisition instruction, wherein the data acquisition instruction acquires a type of the first data, the data acquisition instruction generates a corresponding number of random variables according to the type of the first data, the data acquisition instruction generates second data corresponding to the first data based on the random variable, and forms a dataset based on the second data, the dataset at least including the second data, and the data acquisition instruction automatically acquires multiple corresponding datasets, each dataset in the multiple datasets corresponding to a complete data acquisition instruction;
sending, by the data acquisition apparatus, the multiple datasets to a data acquisition module identification apparatus; and
by, the data acquisition module identification apparatus, determining whether each dataset in the multiple datasets satisfies a preset condition, if YES, determining that the data acquisition module is a valid data acquisition module, and if NO, acquiring the corresponding dataset for analysis and adjusting the data acquisition module until each dataset in the multiple datasets satisfies the preset condition.

11. The method as claimed in claim 10, wherein determining, by the data acquisition module identification apparatus, whether each dataset in the multiple datasets satisfies the preset condition comprises:
determining, by the data acquisition module identification apparatus, whether a jump logic of the data acquisition module is consistent with the preset condition according to a first number and second number in the second data in each dataset in the multiple datasets, the jump logic being a logic related to a jump sequence of the first data in the data acquisition module.

12. The method as claimed in claim 10, wherein determining, by the data acquisition module identification apparatus, whether each dataset in the multiple datasets satisfies the preset condition comprises:
determining, by the data acquisition module identification apparatus, whether a random logic is consistent with the preset condition according to a first numbering sequence or/and second numbering sequence of the second data in each dataset in the multiple datasets, the random logic being a logic related to a storage sequence of the first data in the data acquisition module.

13. The method as claimed in claim 10, wherein determining, by the data acquisition module identification apparatus, whether each dataset in the multiple datasets satisfies the preset condition comprises:
determining, by the data acquisition module identification apparatus, whether an option show/hide logic or option source logic of the data acquisition module is consistent with the preset condition according to the second number of the second data in each dataset in the multiple datasets, the option show/hide logic being a logic related to a data storage manner of the first data, and the option source logic being a logic related to a source of the first data in the data acquisition module.

14. The method as claimed in any one of claims 10-13, wherein the data acquisition instruction comprises select, fill in, forward, back, jump to a specified question, turn the page, and/or complete.

15. A method for automatically identifying a valid data acquisition module, comprising:
acquiring a data acquisition module;
sending the data acquisition module to a data acquisition apparatus for the data acquisition apparatus to receive the data acquisition module, run a data acquisition instruction, and send multiple datasets to a data acquisition module identification apparatus, wherein the data acquisition instruction automatically acquires the multiple corresponding datasets, each dataset in the multiple datasets corresponds to a complete data acquisition instruction, the data acquisition module at least comprises first data, and the dataset at least comprises second data; and
by, the data acquisition module identification apparatus, determining whether each dataset in the multiple datasets satisfies a preset condition, if YES, determining that the data acquisition module is a valid data acquisition module, and if NO, acquiring the corresponding dataset for analysis and adjusting the data acquisition module until each dataset in the multiple datasets satisfies the preset condition.

16. The method as claimed in claim 15, wherein determining, by the data acquisition module identification apparatus, whether each dataset in the multiple datasets satisfies the preset condition comprises:
determining, by the data acquisition module identification apparatus, whether a jump logic of the data acquisition module is consistent with the preset condition according to a first number and second number in the second data in each dataset in the multiple datasets, the jump logic being a logic related to a jump sequence of the first data in the data acquisition module.

17. The method as claimed in claim 15, wherein determining, by the data acquisition module identification apparatus, whether each dataset in the multiple datasets satisfies the preset condition comprises:
determining, by the data acquisition module identification apparatus, whether a random logic is consistent with the preset condition according to a first numbering sequence or/and second numbering sequence of the second data in each dataset in the multiple datasets, the random logic being a logic related to a storage sequence of the first data in the data acquisition module.

18. The method as claimed in claim 15, wherein determining, by the data acquisition module identification apparatus, whether each dataset in the multiple datasets satisfies the preset condition comprises:
determining, by the data acquisition module identification apparatus, whether an option show/hide logic or option source logic of the data acquisition module is consistent with the preset condition according to the second number of the second data in each dataset in the multiple datasets, the option show/hide logic being a logic related to a data storage manner of the first data, and the option source logic being a logic related to a source of the first data in the data acquisition module.

19. An apparatus for automatically identifying a valid data acquisition module, comprising a processor, wherein the processor is configured to execute the method as claimed in any one of claims 1-7 or 10-18.

20. A computer-readable storage medium, storing a computer instruction, wherein a computer executes the method as claimed in any one of claims 1-7 or 10-18 after reading the computer instruction in the storage medium.
